(19) Europäisches Patentamt
European Patent Office
Office européen des brevets

(11) Publication number: **0 632 105 A1**

# (12) EUROPEAN PATENT APPLICATION

(21) Application number: **94109955.8**

(51) Int. Cl.[6]: **C09B 45/28**, D06P 1/10

(22) Date of filing: **28.06.94**

(30) Priority: **02.07.93 JP 188651/93**

(43) Date of publication of application: **04.01.95 Bulletin 95/01**

(84) Designated Contracting States: **CH DE FR GB LI**

(71) Applicant: **Nippon Kayaku Kabushiki Kaisha**
**11-2, Fujimi-cho 1 chome**
**Chiyoda-ku**
**Tokyo (JP)**

(72) Inventor: **Tabei, Toru**
**90-50, Azuma-8-chome**
**Kitamoto-shi (JP)**
Inventor: **Kikuchi, Tsutomu**
**1033-42, Kamihideya**
**Okegawa-shi (JP)**
Inventor: **Sugaya, Kunio**
**2-22-204, Midoricho-1-chome**
**Kasukabe-shi (JP)**

(74) Representative: **Türk, Gille, Hrabal, Leifert**
**Brucknerstrasse 20**
**D-40593 Düsseldorf (DE)**

## (54) Copper complex AZO compounds and dyeing methods using said compounds.

(57) A copper complex azo compound represented by the formula:

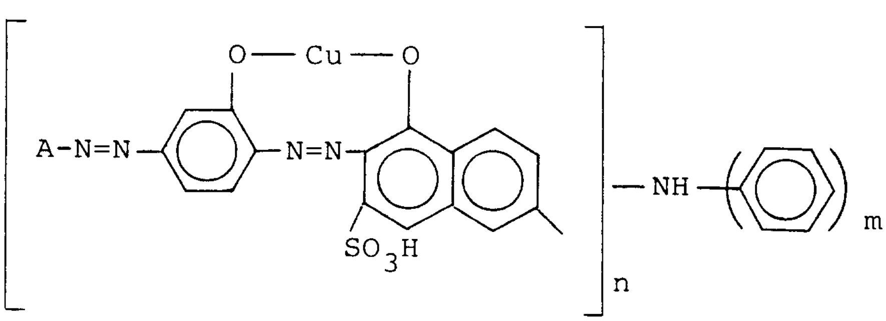

(1)

and a method of dyeing a paper making material and a cellulose fiber or a cellulose-containing fiber with the compound.

A paper making material and a cellulose fiber can be dyed medium blue with a heavy shade and good fastness without using dianisidine, a toxic chemical substance, designated as the Class 1 Specified Chemical Substance (Japan).

EP 0 632 105 A1

The present invention relates to copper complex azo compounds and dyeing methods using them. In particular, the present invention relates to copper complex azo compounds capable of dyeing the materials for papers, cellulose fibers or cellulose-containing fibers with heavy shade and good fastness, and a method of dyeing the materials for papers and cellulose fibers using them.

Well-known dyes capable of dyeing the materials for papers and cellulose fibers blue with a high fastness include C.I. Direct blue 15, 200, 202, 203 etc., which are commonly used in the fields of paper making and dyeing.

However, since dianisidine used as the main starting material for the dyes is a toxic chemical substance designated as one of the Class 1 Specified Chemical Substances in The Hazard Prevention Rule of Specified Chemical Substances (Japan), these dyes have a common problem that the use of dianisidine is strictly regulated and the operation must be conducted in extremely severe protective equipment. Thus dianisidine is one of the restrictive factors in effecting the safety and health control and improving the production efficiently.

Although examples of dianisidine-free blue dyes include C.I. Direct Blue 67, 78, 106 and 108, they have disadvantages of poor dyeing affinity and poor fastness as compared with the blue dianisidine dyes. In other words, unless dianisidine is used, it is difficult to obtain a blue dye having high fastness and good dyeing affinity. Under these circumstances, blue dyes based on dianisidine are now widely produced and used, even though dianisidine is a toxic chemical substance corresponding to the Class 1 Specified Chemical Substance and a high cost is necessitated for the protective equipment for preventing the workers from being exposed to this substance.

Thus, it has been eagerly demanded for a long time to produce an excellent blue dye without using a starting material belonging to the Specified Chemical Substances such as dianisidine in the fields of dye production, paper making and dyeing.

As for blue dyes produced from a starting material other than dianisidine, Japanese Patent Publication No. 5623/1989 discloses, for example a dye of the following compound in Example 1 thereof:

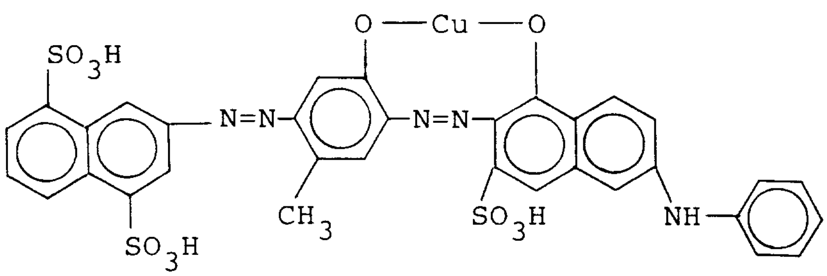

Although this dye is capable of level-dyeing a paper making material brilliant blue, a medium blue color cannot be obtained due to a greenish hue to limit the use of the dye. Another problem is that the dyeing affinity and color value are poor.

It is eagerly demanded, therefore, to develop a dye which is capable of dyeing paper making materials and cellulose fibers, particularly the former materials, with fastness, heavy shade and more medium blue and is harmless to the human bodies and also to the earth from the viewpoints of safety, health, resource saving and prevention of environmental pollution by solving the above-described problems, i.e. the use of dianisidine which is one of the Class 1 Specified Chemical Substances, the greenish blue hue, and poor dyeing affinity and poor color value.

After intensive investigations made for the purpose of solving the above-described problems, the inventors have completed the present invention. Namely, the present invention provides a copper complex azo compound represented by the following formula in the free acid form:

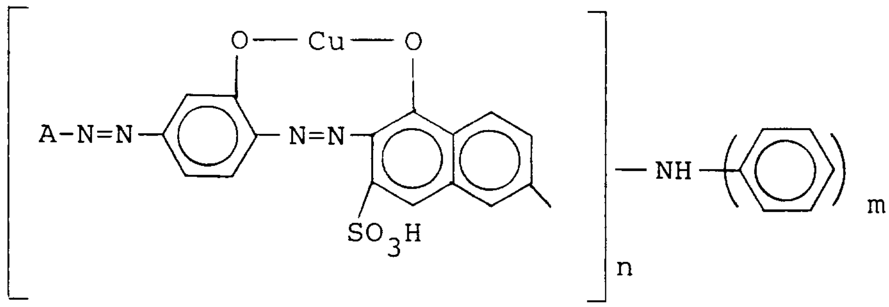

(1)

wherein A represents a phenyl or naphthyl group having sulfonic acid group(s), n represents 1 or 2, and m represents 0 or 1, with the proviso that m is 1 when n is 1 and m is 0 when n is 2,
and a process for dyeing materials for papers, cellulose fibers or cellulose-containing fibers, by using the copper complex azo compound represented by the above formula (1) in the free acid form.

The copper complex azo compound of the formula (1) can be produced as follows: A sulfonated aromatic amine of the formula:

$A\text{-}NH_2$ (2)

wherein A is as defined above,
is diazotized by the ordinary method and then coupled under an acidic condition with an aromatic amine of the formula:

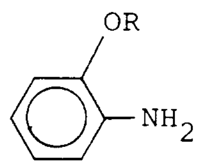

(3)

wherein R represents a methyl or ethyl group, or ω-methanesulfonate thereof at a temperature of, for example, 5 to 40 °C, preferably 10 to 25 °C. The resultant compound is hydrolyzed, if necessary, to obtain an aminoazo compound of the formula (4):

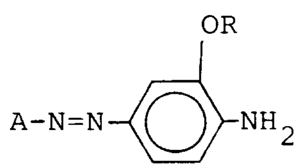

(4)

wherein A and R are each as defined above,

which is diazotized by the ordinary method and then coupled under an alkaline condition with 6-phenylamino-1-naphthol-3-sulfonic acid or N,N'-bis(1-hydroxy-3-sulfo-6-naphthyl)amine at a temperature of, for example, 5 to 40 °C, preferably 10 to 25 °C, to obtain a disazo compound or tetrakisazo compound of the following formula:

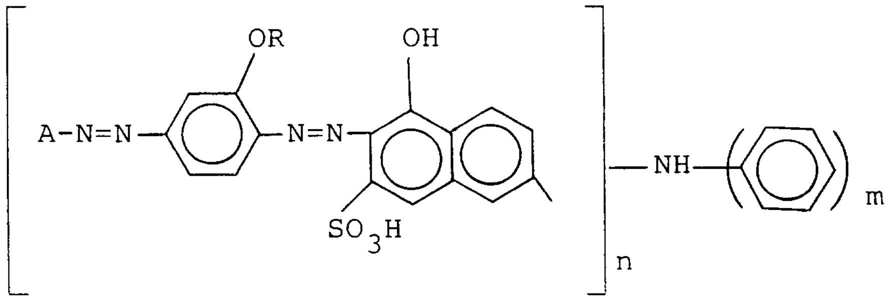

(1)

wherein A, R, m and n are each as defined above in the free acid form.

Then a copper complex salt compound comprising, for example, copper sulfate, copper acetate, copper nitrate, ammonia water or/and an alkanolamine or/and hexamethylenetetramine is added to the obtained compound and the reaction was conducted at a temperature of, for example, 50 to 100 °C, preferably 85 to 98 °C to obtain a copper complex azo compound of the formula (1). The intended dye is isolated from the liquid reaction mixture by the ordinary salting-out method or precipitation-by-acid method. Alternatively, the reaction mixture may be directly spray-dried or a solubilizer or a stabilizer such as urea, an alkanolamine, an alkylamine or ϵ-caprolactam may be added to the liquid reaction mixture directly or after demineralization and concentration to obtain a solution. The dye of the formula (1) thus produced is in the free acid form or a salt thereof. The salts are preferably alkali metal, alkaline earth metal, alkylamine and alkanolamine salts, particularly sodium, potassium and lithium salts.

The sulfonated aromatic amines of the above formula (2) include aniline-monosulfonic acids and disulfonic acids, and 1-naphthylamine- or 2-naphthylamine-monosulfonic, disulfonic and trisulfonic acids. The anilinemonosulfonic acids include, for example, aniline-2-sulfonic, aniline-3-sulfonic and aniline-4-sulfonic acids. The anilinedisulfonic acids include, for example, aniline-2,4-disulfonic and aniline-2,6-disulfonic acids. The 1-naphthylamine- or 2-naphthylamine-monosulfonic acids include, for example, 1-naphthylamine-4-sulfonic, 1-naphthylamine-5-sulfonic, 1-naphthylamine-6-sulfonic, 1-naphthylamine-7-sulfonic, 2-naphthylamine-1-sulfonic, 2-naphthylamine-5-sulfonic, 2-naphthylamine-6-sulfonic and 2-naphthylamine-8-sulfonic acids. The 1-naphthylamine- or 2-naphthylamine-disulfonic acids include, for example, 1-naphthylamine-3,6-disulfonic, 1-naphthylamine-3,8-disulfonic, 1-naphthylamine-4,6-disulfonic, 2-naphthylamine-1,5-disulfonic, 2-naphthylamine-3,6-disulfonic, 2-naphthylamine-4,8-disulfonic, 2-naphthylamine-5,7-disulfonic and 2-naphthylamine-6,8-disulfonic acids. The 1-naphthylamine- or 2-naphthylamine-trisulfonic acids include, for example, 1-naphthylamine-3,6,8-trisulfonic, 2-naphthylamine-3,6,8-trisulfonic and 2-naphthylamine-4,6,8-trisulfonic acids. The aromatic amines of the above formula (3) include 2-methoxyaniline and 2-ethoxyaniline.

Next, a description will be made on the method of dyeing paper, pulp and fiber with the novel copper complex azo compound of the present invention.

(1) Method of dyeing paper and pulp:

A surface application technique and a beater technique can be applicable for dyeing paper and pulp. The surface application technique for paper can be broadly classified into the size press method wherein paper is impregnated (or coated) with a size-press fluid in the size press step, and the coating (coated paper) method wherein a coating fluid mainly comprising a white inorganic pigment and an adhesive is applied to the surface of paper by means of a coater or gate roll. In the size press method, a size press fluid prepared by dissolving a modified starch and the dye of the formula (1) of the present invention in water is applied to the surface of paper on a size pressing machine, and the paper is dried on a drum drier or the like at about 50 to 140 °C to obtain colored paper. A water-proofing agent such as a polyamide/urea resin or a melamine resin may be incorporated into the size press fluid in the course of the preparation.

In the coating method, a coating fluid prepared by adding water to a white inorganic pigment, adhesive, dispersing agent and the dye of the formula (1) of the present invention is applied to the surface of paper by means of a coater or gate roll and the paper is dried with, for example, a hot air dryer usually at 90 to 140 °C to obtain colored paper. A water-resistant agent such as a polyamide/urea resin or a melamine resin, an antiseptic and an antifoaming agent may be incorporated, if desired, into the coating fluid. An example of the adhesives usually preferred is a mixture of a modified starch (such as oxidized starch, starch esterified with phosphoric acid or starch modified with an enzyme) and a styrene/butadiene copolymer (such as mixture of the modified starch and styrene-butadiene copolymer). The white inorganic pigments include, for

example, clay, kaolin, heavy calcium carbonate, titanium oxide and aluminum hydroxide. These pigments may be used either singly or in combination of them. As the dispersant, an acrylic polymer, sodium pyrophosphate, sodium tripolyphosphate or the like is used in an ordinary manner.

In the beater technique, the dye represented by the formula (1) of the present invention is dissolved in water to form a dye bath and pulp is added to the bath to conduct dyeing at about 10 to 60 °C for about 0.5 to 45 min. If desired, a sizing agent, aluminum sulfate, water-resistant agent, strength additive, fixing agent, paper quality improver, etc., may be add to the dye bath. The sizing agent includes rosin, modified rosin, synthetic polymers, alkylketene dimers, and alkenylsuccinic anhydride.

The water-resistant agent includes a polyamide/urea resin and a melamine resin. The strength additives include corn starch, cationized starch, and modified guar gum. The fixing agent includes polyamines, quaternary ammonium salts and dicyandiamide condensates. The paper quality improver includes talc, kaolin, titanium oxide, heavy calcium carbonate, and aluminum hydroxide.

(2) Method of dyeing fibers:

Ordinary methods of dyeing fibers, namely, the dip dyeing method, the continuous dyeing method and the printing method, can be employed in the present invention. In the dip dyeing method, the dye represented by the general formula (1) of the present invention is added to a dye bath (3 to 60:1 liquor to goods ratio) containing 5 to 30%, on weight of fiber, of sodium chloride or anhydrous sodium sulfate, and the fiber material is fed into the dye bath and heated under stirring to conduct dyeing at 50 to 130 °C for 30 to 120 min. A suitable dyeing auxiliary may be added to the dye bath in a suitable amount.

In the continuous dyeing method, the fibrous material is padded with an aqueous solution of the dye represented by the formula (1) of the present invention. The dye is fixed in the fiber by batching at room temperature for 2 to 24 h, by steaming at a temperature of 100 to 150 °C for a short time or by treating in a 5 to 10% aqueous solution of sodium chloride or anhydrous sodium sulfate heated to 80 to 100 °C for 10 to 60 min. If necessary, the padding solution may contain ordinary additives such as urea, a penetrating agent and a reduction inhibitor.

In the printing method, the fiber material is printed with a color paste prepared from the dye represented by the formula (1) of the present invention, a size and auxiliaries such as a reduction inhibitor and a solubilizer, and then the printed fiber material is steamed at a temperature of 100 to 150 °C for 1 to 60 min to fix the dye.

In dyeing a blended fiber or multi-fiber fabric comprising a cellulose fiber and a fiber of another kind, such as a blended fiber comprising a synthetic fiber and cellulose, particularly a blended fiber comprising a polyester and cotton (hereinafter referred to as T/C blend"), the dyeing of the polyester fiber with a dispersed dye is conducted usually at a high temperature (120 to 140 °C) in an acid bath. These conditions do not coincide with the dyeing conditions for the above-described cellulose fiber (in a neutral bath at 90 to 100 °C). Thus the T/C blend is dyed by the so-called "two-bath dyeing" or "one-bath two step process" method by using a combination of a direct dye with a disperse dye. In addition, the T/C blend is dyed also by the "one-bath one-step process" method for improving the efficiency by saving energy and labor in the dyeing. Also the dyes represented by the formula (1) in the present invention are usable in the two-bath dyeing, one-bath two-step process and one-bath one-step process method.

The product thus dyed by the above-described dip-dyeing, continuous dyeing or printing method is fixed with a commercially available fixing agent to further improve the color fastness to washing and to water.

The following Examples will further illustrate the present invention, which by no means limit the invention. In the Examples, parts and percentages are given on the weight basis, and the sulfonic acid groups in the respective formulae are shown in the free acid form.

Example 1

30.3 parts of 2-naphthylamine-4,8-disulfonic acid (primary diazo component) was dissolved in 200 parts of water. The resultant solution was added to 90 parts of water containing 41 parts of 35% hydrochloric acid. 7.2 parts of sodium nitrite was added to the resultant mixture at 15 to 20 °C. After conducting the diazotization for 1 h, 12.9 parts of 2-methoxyaniline (primary coupling component) and 10 parts of thiourea were added to the reaction mixture. After stirring the resultant mixture overnight while the pH thereof was kept at 3.0 to 3.5 with sodium acetate to conduct coupling, 10%, based on the liquid, of common salt was added to the mixture to effect salting out. After filtration, the resultant aminoazo compound (secondary diazo component) was dissolved in 270 parts of water and 2.6 parts of sodium hydroxide. 4.8 parts of sodium

nitrite was added to the solution, and the resultant liquid mixture was added dropwise to a solution comprising 130 parts of water and 31 parts of 35% hydrochloric acid for 10 min. Then diazotization was conducted at 15 to 20 °C for 2 h. The reaction mixture was added to an aqueous solution comprising 20.7 parts of 6-phenylamino-1-naphtol-3-sulfonic acid (secondary coupling component), 90 parts of water and 15 parts of sodium carbonate. The resultant mixture was stirred at 20 °C overnight while the pH was kept at 8.5 to 9.5 with sodium carbonate to conduct secondary coupling, thereby obtaining a disazo compound. Then a copper complex salt prepared by adding 34 parts of diethanolamine to an aqueous solution of 16.3 parts of copper sulfate was added to the mixture to form a copper derivative (completed usually after 4 to 5 h) at 95 to 98 °C until unreacted compounds were no more detectable. Finally 10%, based on the liquid, of common salt was added to the mixture to conduct salting out. After drying, a dye of the following formula in the free acid form was obtained. The dye was capable of dyeing a paper making material and a cellulose fiber brilliant and medium blue. The aqueous dye solution had a $\lambda_{max}$ (determined in aqueous solution) of 577 nm.

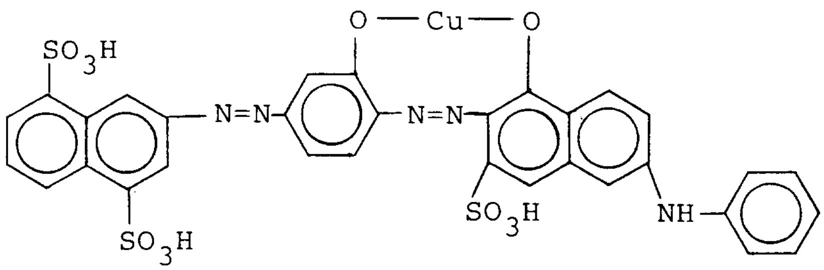

(Compound No. 1)

Example 2

The same procedure as that of Example 1 was repeated except that 30.3 parts of 2-naphthylamine-4,8-disulfonic acid was replaced by 17.3 parts of aniline-3-sulfonic acid and 34 parts of diethanolamine was replaced by 45 parts of 25% ammonia water to obtain a dye of the following formula in the free acid form which was capable of dyeing a paper making material and a cellulose fiber brilliant and medium blue. The dye had a $\lambda_{max}$ of 570 nm.

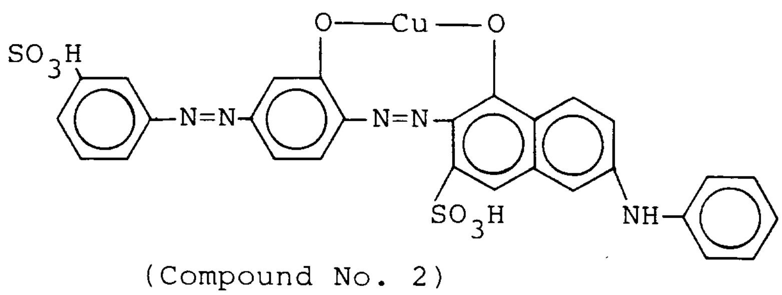

(Compound No. 2)

Example 3 to 13

The same procedure as that of Example 1 was repeated except that 2-naphthylamine-4,8-disulfonic acid and 2-methoxyaniline were replaced by each compound in Column 2 of the following table [compound of the formula (1); the primary diazo component] and each compound in Column 3 of the following table [compound of the formula (3); the primary coupling component], respectively, and 6-phenylamino-1-naphthol-3-sulfonic acid was used as the secondary coupling component to obtain a copper complex disazo dye. A paper making material and a cellulose fiber were dyed with each of the obtained copper complex disazo dyes to obtain a dyed product having a shade given in Column 4 of the following table.

Table 1

| Column 1 compound. No. | Column 2 Compd. of formula (2) | Column 3 compd. of formula (3) | Column 4 Shade | $\lambda_{max}$ (nm) |
|---|---|---|---|---|
| 3 | 2-naphthylamine-4,8-disulfonic acid | 2-ethoxyaniline | medium blue | 577 |
| 4 | aniline-2-sulfonic acid | 2-methoxyaniline | medium blue | 570 |
| 5 | aniline-2,5-disulfonic acid | 2-methoxyaniline | medium blue | 573 |
| 6 | 1-naphthylamine-4-sulfonic acid | 2-methoxyaniline | medium blue | 579 |
| 7 | 2-naphthylamine-1-sulfonic acid | 2-methoxyaniline | medium blue | 575 |
| 8 | 2-naphthylamine-6-sulfonic acid | 2-methoxyaniline | medium blue | 577 |
| 9 | 1-naphthylamine-3,6-disulfonic acid | 2-methoxyaniline | medium blue | 580 |
| 10 | 2-naphthylamine-3,6-disulfonic acid | 2-methoxyaniline | medium blue | 578 |
| 11 | 2-naphthylamine-6,8-disulfonic acid | 2-methoxyaniline | medium blue | 578 |
| 12 | 1-naphthylamine-3,6,8-trisulfonic acid | 2-methoxyaniline | medium blue | 588 |
| 13 | 2-naphthylamine-3,6,8-trisulfonic acid | 2-methoxyaniline-ω-methanesulfonic acid* | medium blue | 587 |

*1: In this case, the aminoazo compound of the formula (4) was obtained by adding 7%, based on the liquid, of sodium hydroxide to the monoazo compound solution obtained by the acid coupling with diazotized 2-naphthylamine-3,6-8-trisulfonic acid, and then treating the resultant mixture at 98 to 100 °C for 2 to 3 h .

Example 14

The same procedure as that of Example 1 was repeated except that 20.7 parts of 6-phenylamino-1-naphthol-3-sulfonic acid was replaced by 15.1 parts N,N'-bis(1-hydroxy-3-sulfo-6-naphthyl)amine to obtain a dye of the following formula in the free acid form, which dyed a paper making material and a cellulose fiber

brilliant and medium blue. The dye had a $\lambda_{max}$ of 633 nm.

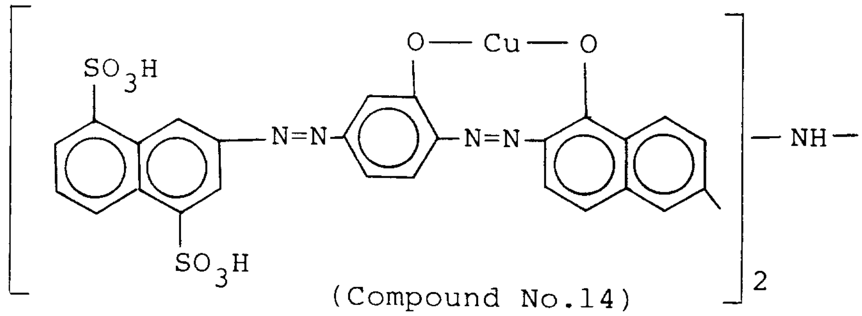

(Compound No.14)

Example 15 to 24

The same procedure as that of Example 14 was repeated except that 2-naphthylamine-4,8-disulfonic acid and 2-methoxyaniline were replaced by each compound in Column 2 of the following table [compound of the formula (2); the primary diazo component] and each compound in Column 3 of the following table [compound of the formula (3); the primary coupling component], respectively, and N,N'-bis(1-hydroxy-3-sulfo-6-naphthyl)amine was used as the secondary coupling component to obtain a copper complex tetrakisazo dye. A paper making material and cellulose fiber were dyed with each of the obtained copper complex tetrakisazo dyes to obtain a dyed product having a shade given in Column 4 of the following table.

Table 2

| Column 1 compound. No. | Column 2 Compd. of formula (2) | Column 3 compd. of formula (3) | Column 4 Shade | $\lambda_{max}$ (nm) |
|---|---|---|---|---|
| 15 | aniline-4-sulfonic acid | 2-ethoxyaniline | blue | 596 |
| 16 | aniline-2,4-disulfonic acid | 2-methoxyaniline | blue | 613 |
| 17 | 1-naphthylamine-6-sulfonic acid | 2-methoxyaniline | blue | 631 |
| 18 | 2-naphthylamine-5-sulfonic acid | 2-methoxyaniline | blue | 630 |
| 19 | 1-naphthylamine-3,8-disulfonic acid | 2-methoxyaniline | blue | 634 |
| 20 | 2-naphthylamine-1,5-disulfonic acid | 2-methoxyaniline | blue | 632 |
| 21 | 2-naphthylamine-5,7-disulfonic acid | 2-methoxyaniline | blue | 633 |
| 22 | 1-naphthylamine-3,6,8-trisulfonic acid | 2-methoxyaniline | blue | 636 |
| 23 | 2-naphthylamine-3,6,8-trisulfonic acid | 2-methoxyaniline | blue | 635 |
| 24 | 2-naphthylamine-4,6,8-trisulfonic acid | 2-methoxyaniline | blue | 635 |

Example 25 and Comparative Example

1 part of the dye obtained in Example 1 was dissolved in 1,000 parts of water to prepare a dye bath. 300 parts of beaten kraft pulp (30 parts of absolutely dried pulp, having a degree of beating of 35°SR) was

added to the solution. After stirring the resultant mixture at room temperature for 15 min followed by the addition of 1 parts of a rosin size (30% aqueous solution), the resultant mixture was stirred for 10 min. 3 parts of crystalline aluminum sulfate was added to the mixture, and the resultant mixture was stirred for 20 min. A paper was prepared from the pulp thus dyed. The resultant paper was a brilliant and medium blue paper.

The pulp was dyed with the known dye A, B, C and the dye of Example 1 of the present invention in the same manner as that described above, and a paper was prepared from each of the pulps thus dyed. The hue, dyeing affinity and fastness to light of them were determined and compared with each other to obtain the results given in the following table.

Table 3

| Type of dye*2 | Hue | Dyeing affinity (DS/OD) | Fastness to light JIS L 0842 |
|---|---|---|---|
| Known dye A | medium blue | 100 | 1 |
| Known dye B | slightly reddish blue | 80 | 3-4 |
| Known dye C | greenish blue | 65 | 3-4 |
| Dye of Ex. 1 of the invention | Medium blue | 110 | 3-4 |

*2 Known dye A: Dianisidine blue dye popular at present (C.I. Direct Blue 15)
Known Dye B: Dianisidine blue dye popular at present (C.I. Direct Blue 200)
Known dye C: Dianisidine-free blue dye described in Example 1 of Japanese Patent Publication No. 5623/1989.

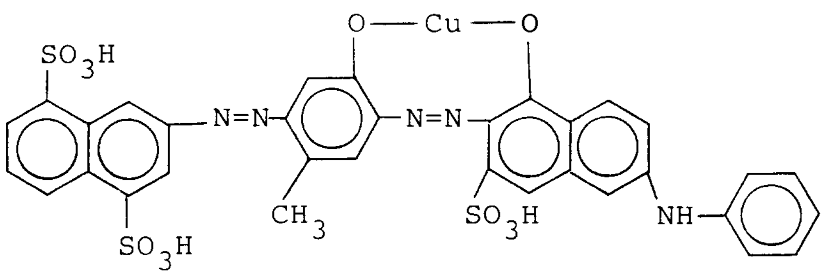

As for the known dianisidine blue dyes A and B with are popular at present, the dye A has a medium blue hue and a dyeing affinity (DS/OD) of as high as 100 but the fastness to light thereof is as low as grade 1; and the dye B has a fastness to light of as high as grade 3 or 4 but it has a hue of slightly reddish blue, a dyeing affinity of as low as 80 and a poor levelness in dyeing. Thus they have both merits and demerits. The dye to be used is, therefore, selected depending on the use of the dyed product at present. The known dye C is a dianisidine-free blue dye having a fastness to light as high as grade 3 or 4 but it has a greenish blue hue, a dyeing affinity of as low as 65 and a poor levelness in dyeing.

On the contrary, the dianisidine-free dye of Example 1 of the present invention has a high color value since it shows a dyeing affinity of as high as 110, and it has a medium blue hue and a fastness to light of grade 3 or 4. Other characteristic features of this dye are that it has an excellent levelness in dyeing, a high solubility (90 g/l at 80 °C) and a high resistance to metal ions in the dyeing water. Thus, this dye is superior to the known dyes A, B and C.

Example 26

10 parts of the dye obtained in Example 2 was dissolved in 1,000 parts of water. 2 parts of an anionic surface size was added to the solution. The pH of the resultant solution was adjusted to 8.0 to obtain a size press coating fluid. The fluid was fed into a size pressing machine to color a paper having a low sizing

degree, i.e. a Steckigt sizing degree of 7 sec, thus obtaining a paper of well-levelled, medium and brilliant blue color.

Example 27

1 part of the dye of Example 14 was dissolved in 200 parts of boiling water. 3 parts of anhydrous sodium sulfate and 800 parts of water were added to the solution to form a dye bath. 30 parts of a cellulose fiber (viscose rayon, cupra or cotton) cloth was immersed in the dye bath. The temperature was gradually elevated to 90 ° C under stirring and dyeing was conducted under these conditions for 30 min. After washing with water followed by drying, the cloth was dyed blue. It has a fastness to light (JIS L 0842) of as high as grade 5 or above.

50 parts of the cloth dyed as described above was immersed in a polyamine fixing bath (solution of 2 parts of the fix in 1,000 parts of water) at 60 ° C for 20 min, mildly washed with water, and dried. The fastness to washing (JIS L 0844 A-4) of the dyed cloth thus treated was: change in shade of grade 4 or 5, viscose rayon staining of grade 4 or 5 and cotton staining of grade 5. The change in shade was superior to that of dianisidine blue dye C.I. Direct Blue 200 which is popularly used at present by grade 1. The dyed cloth had a fastness to light of as high as grade 5.

Example 28

1 parts of the dye of Example 21 was dissolved in 50 parts of boiling water. 10 parts of anhydrous sodium sulfate and 950 parts of water were added to the solution to form a dye bath. 50 parts of a cotton cloth was immersed in the dye bath. The temperature was gradually elevated to 130 ° C under stirring and the cloth was kept therein at that temperature for 40 min. After cooling to 90 ° C, the temperature was kept at that point for 15 min to obtain the cloth dyed blue. The dyed cloth was immersed in a polyamine fixing bath (solution of 2 parts of the fix in 1,000 parts of water) at 60 ° C for 20 min, mildly washed with water and dried. The fastness to washing (JIS L 0844 A-4) of the dyed cloth thus treated was as follows: change in shade of grade 4 or 5, viscose rayon staining of grade 4 or 5 and cotton staining of grade 5. The cloth had a fastness to light of as high as grade 5.

Example 29

1.4 parts of the dye of Example 14 was dissolved in 100 parts of boiling water. A dispersed material prepared by dispersing 1.3 parts of Kayalon Polyester Blue E-5G (a disperse dye produced by Nippon Kayaku K.K.) in 25 parts of 50 ° C water, 375 parts of water and 10 parts of anhydrous sodium sulfate were added to the solution to form a dye bath. The pH of the dye bath was adjusted to 5.0 with acetic acid and sodium acetate. 50 parts of a polyester fiber/rayon spun fabric (blending ratio: 65:35) was added to the dye bath. The temperature was elevated to 130 ° C in the course of 40 min and kept at that point for 30 min. After lowering to 90 ° C, the temperature was kept at that point for 15 min to obtain the dyed cloth. After the completion of the dyeing followed by washing with water and the ordinary fixing treatment with a fix, the cloth dyed blue and having excellent fastnesses to washing and light was obtained.

Thus a blue direct dye capable of dyeing a paper making material and a cellulose fiber medium blue with a heavy shade and good fastness was obtained without using dianisidine designated as the Class 1 Specified Chemical Substance.

## Claims

1. A copper complex azo compound represented by the formula (1) in the free acid form:

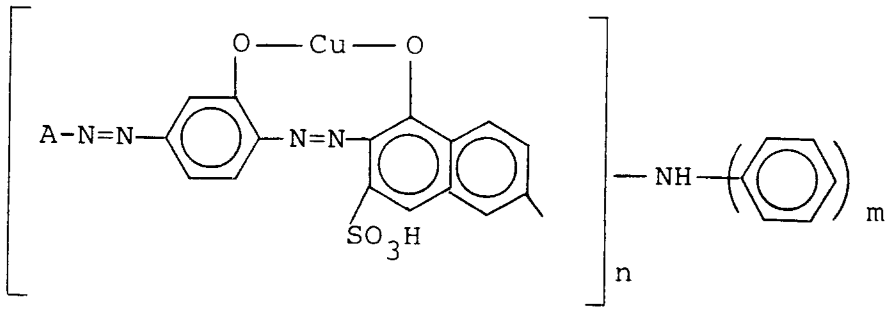

(1)

wherein A represents a phenyl or naphthyl group having sulfonic acid group(s), n represents 1 or 2, and m represents 0 or 1, with the proviso that m is 1 when n is 1 and m is 0 when n is 2.

**2.** A copper complex azo compound according to Claim 1 wherein A in the formula (1) represents

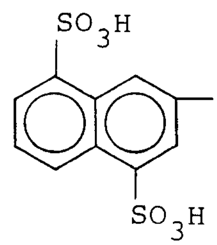

**3.** A copper complex azo compound according to Claim 1 wherein A in the formula (1) represents

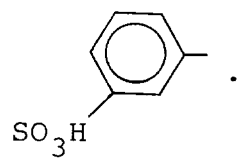

**4.** A copper complex azo compound according to Claim 2, wherein m is 1 and n is 1.

**5.** A method of dyeing a paper making material and a cellulose fiber or a cellulose-containing fiber, which comprises using the copper complex azo compound represented by the formula (1) in the free acid form as set forth in Claim 1.

European Patent Office

# EUROPEAN SEARCH REPORT

Application Number

EP 94109955.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 6) |
|---|---|---|---|
| X,D | PATENT ABSTRACTS OF JAPAN, unexamined appplications, C field, vol. 6, no. 244, December 02, 1982 THE PATENT OFFICE JAPANESE GOVERNMENT page 164 C 138; & JP-A-57 145 155 (NIPPON KAYAKU K.K.) -- & JP-B-01 5 623 -- | 1,2, 4,5 | C 09 B 45/28<br>D 06 P 1/10 |
| X | DE - A - 3 236 238 (SANDOZ-PATENT-GMBH) * Claims 1,2,5-7; page 14, last 9 lines; page 17, example no. 51; page 15, example no. 2 * ---- | 1-5 | |
| | | | TECHNICAL FIELDS SEARCHED (Int. Cl.6) |
| | | | C 09 B<br>D 06 P |

The present search report has been drawn up for all claims

| Place of search | Date of completion of the search | Examiner |
|---|---|---|
| VIENNA | 04-10-1994 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)